# EUROPEAN PATENT APPLICATION

(11) **EP 4 797 479 A1**
(43) Date of publication of application: **26.08.2026**
(21) Application number: 25158733.3
(22) Date of filing: 19.02.2025
(51) Int. Cl.: H02J 3/14, C25B 1/04, C25B 15/02, H02J 3/30

(54) **CONTROLLING OF AN ELECTROLYZING PLANT**

(71) Applicant: Siemens Energy Global GmbH & Co. KG, 81739 München (DE)
(72) Inventor: Craciun, Bogdan, 91052 Erlangen (DE); Loku, Fisnik, 90439 Nürnberg (DE); Bendig, Marvin, 90513 Zirndorf (DE); Schumann, Sven, 91452 Wilhermsdorf (DE)

(57) **Abstract**

The invention relates to a method of controlling an electrolyzing plant (10) having plural electrolyzing cells (14) providing an electrolyzing process in response to being subjected to a DC electrolyzing power, wherein the electrolyzing plant is supplied with electric power from an electric power network (12) deploying an alternating voltage having a basic frequency, wherein an AC side (22) of an electric converter (20) is connected with the electric power network, a DC side (24) of the electric converter (20) provides the DC electrolyzing power. A synchronous machine (30) has a stator winding, wherein a rotational speed of a rotor (28) of the synchronous machine is detected by a speed sensor (26) that provides a sensor signal (34), wherein a control apparatus (36, 54) receives and processes the sensor signal and controls an operation of an energy adaptation device (44, 46) dependent on the processed sensor signal.

## Description

The invention relates to a method of controlling an electrolyzing plant having plural electrolyzing cells, especially configured to electrolyze water by providing an electrolyzing process, wherein the electrolyzing cells perform the electrolyzing process in response to being subjected to a DC electrolyzing power, wherein the electrolyzing plant is supplied with electric power from an electric power network, wherein the electric power network deploys an alternating voltage having a basic frequency, wherein an AC side of at least one electric converter of the electrolyzing plant is electrically connected with the electric power network in order to receive the electric power, and a DC side of at least one electric converter provides the DC electrolyzing power in response to the AC side receiving the electric power. The invention also relates to an electrolyzing plant having plural electrolyzing cells, especially configured to electrolyze water by providing an electrolyzing process, wherein the electrolyzing cells perform the electrolyzing process in response to be subjected to a DC electrolyzing power, a point of connection configured to be connected with an electric power network in order to supply the electrolyzing plant with electric power from the electric power network, wherein the electric power network deploys an alternating voltage having a basic frequency, at least one electric converter having an AC side electrically connected with the point of connection, in order to receive the electric power from the electric power network, and a DC side connected with the electrolyzing cells, wherein the DC side is configured to provide the electrolyzing cells with the DC electrolyzing power in response to the AC side receiving the electric power.

Methods of controlling electrolyzing plants, for instance, for producing hydrogen and oxygen by electrolyzing of water in an electrolyzing process, and electrolyzing plants are well known in the state of the art, which is why specific references about the state of the art need not to be cited. The invention relates to objects providing an electrolyzing process, which are used, for example, for producing hydrogen and oxygen by electrolyzing of water. The following considerations can be also applied to such electrolyzing processes, respectively.

Electrolysis itself is provided by the plural electrolyzing cells. A group of the electrolyzing cells may be arranged such as to form an electrolyzing module. One or more electrolyzing modules may form an electrolyzing device.

The electrolyzing cells perform the electrolyzing process in response to being subjected to a DC electrolyzing power. The electrolyzing cells may be arranged at least partially as a stack or in two or more stacks. The DC electrolyzing power may be deployed by a DC electrolyzing voltage and a DC electrolyzing current. Especially, when the electrolyzing cells are arranged in one or more stacks, a specific stack may be subjected to a respective portion of the electrolyzing power.

The electrolyzing cells may be electrically connected at least partially in series and/or in parallel. An electric connection of the electrolyzing cells may be provided such that at least some, or perhaps all, of the electrolyzing cells are subjected to a respective portion of a DC voltage or the DC electrolyzing voltage, respectively, subjected to the electrolyzing device, the stack or the like. The operation of generic electrolyzing cells as well as the stack, for instance, for the use of electrolyzing of water, are well-known to those skilled in the art, such as, for instance, disclosed by DE 197 29 529 C1. The generic function of electrolysis, especially electrolysis of water, is also well known to those skilled in the art, which is why it is refrained from further detailed explanation in this specification.

During the electrolyzing process, when the electrolyzing cells are subjected to the suited DC electrolyzing power, especially the DC electrolyzing voltage, the electrolyzing cells respond with the DC electrolyzing current flow. Especially with regard to electrolyzing of water, during the electrolyzing process, water is consumed, and hydrogen and oxygen are produced. A value of the DC electrolyzing voltage usually may depend on the number of electrolyzing cells being connected in series inside of the at least one stack. Generally, the electrolyzing cells of one stack are usually connected in series. Therefore, the DC current flow may depend on the applied DC voltage and the characteristics of the electrolyzing cells such as, for instance, electrical resistance, electrical impedance, aging and/or the like, of the series-connected electrolyzing cells. However, in some exemplary embodiments having a different design, the electrolyzing DC current flow may also depend on a number of electrolyzing cells being connected in parallel if applicable and/or a specific design of each of the electrolyzing cells.

Usually, an electrolyzing plant requires a respective high-power power supply during the electrolyzing process. For this purpose, the electrolyzing plant may have a point of connection (PoC), wherein, at the point of connection, the electrolyzing plant is electrically connected with the electric power network or grid, respectively. It should be noted that the conditions for establishing the electrolyzing process by the electrolyzing cells of the electrolyzing plant are not easy to manage which is why it is usually an intention of an operator of the electrolyzing plant to maintain a specific processing condition and to avoid large amendments of this condition. Therefore, controlling the electrolyzing process of the electrolyzing cells in order to support stability of the electric power network should consider these requirements for supplying the electrolyzing plant with electric energy, on the one hand. Controlling can also be at least partially provided by a respective apparatus of the electrolyzing plant. On the other hand, network requirements of the electric power network also need to be considered, such as, for example, harmonics, power factor, low voltage condition, high voltage condition, frequency deviation, and/or the like.

The electrolyzing plant may have an internal power network, which is connected with the point of connection. Especially, the internal power network may receive electric energy from the electric power network and transmit the electric energy at least to the electrolyzing cells. In this regard, it should be noted that the electrolyzing plant, especially the internal power network, usually has at least one electric converter, for instance, a rectifying device, providing an electrical coupling between the point of connection, which is connected with the electric power network, and the electrolyzing cells. The electrolyzing cells need to be supplied with DC voltage, whereas, usually, the electric power network provides an AC voltage, especially, a three-phase AC voltage. Therefore, the electrolyzing plant has at least one electric converter, which receives the AC voltage and, in response, provides the DC electrolyzing voltage, or DC electrolyzing power, respectively.

Usually, the at least one electric converter may provide a rectifying operation, as a power input of the at least one electric converter may be subjected to the AC voltage. However, a power output of the at least one electric converter provides the DC electrolyzing voltage. For the purpose of rectifying as such, the electric converter may be of the line-commutated type which may have switching elements such as, for example, thyristors, diodes and/or the like, or the electric converter may be of the self-commutated type which may have transistors as switching elements such as, for example, insulated gate bipolar transistors (IGBT), field effect transistors (FET) such as, for instance, metal oxide semiconductor field effect transistors (MOSFET), and/or the like, respectively. The switching elements can be controlled by a control apparatus of the electric converter, in order to adjust a specific electric power to be supplied to the electrolyzing cells. The control apparatus can be in communication with the apparatus for controlling the electrolyzing plant.

It should be further considered that the number of installed electrolyzing plants and existing electric power networks continuously increases. With regard to the global warming range, it is preferred to accelerate the production of green hydrogen. Simultaneously, the share of power electronic based units like renewable energy systems also increases leading to a decrease in grid stability. Consequently, electric power network operators or transmission system operators (TSO), respectively, consider defining requirements for the connection of large scale electrolyzing plants in an existing electric power network, in order to ensure a stable grid operation.

Usually, the electrolyzing plant requires a high power consumption, for instance, causing an AC current of the electric power network in a range of about single-digit kA through about low double-digit kA. The situation may become even more serious when considering a trend that most of the countries of the world are replacing existing conventional power plants by renewable energy sources, which further decreases a strength and a stability of the electric power network.

In case of system perturbations of the electric power network, such as, for instance, a voltage drop, a brownout, an overvoltage condition, a frequency deviation, or the like, supporting capabilities for stabilizing the electric power network by photovoltaic farms, wind farms and/or the like may not be sufficient to ensure a stable operation of the electric power network. In this regard, it is considered to provide new requirements for electrolyzing plants.

Moreover, large flexible loads connected to the electric power network, or grid, respectively, in particular electrolyzing plants, may cause a substantial effect on the security and/or stability of the operation of the power supply network, especially, in case that the operation of the electrolyzing plant be not flexible with requirements regarding the operation of the power supply network. For example, during a power supply network fault caused by different reasons, the alternating voltage and/or its basic frequency may differ from a rated value. However, the electrolyzing plant shall stay connected and permanent disconnection shall be avoided. Additionally, grid stabilizing measures shall be performed by the electrolyzing plant.

Connecting large electrolyzing plants to a public grid may require compliance with the fulfillment of the local grid code requirements. Part of these requirements - especially for large scale electrolyzing plants - is the support of the grid stability in case of a predefined tolerable frequency band may be left by an under-frequency (LFSM-U) or an over-frequency (LFSM-O). Such deviations may be caused by an imbalance in the grid between generation of electric power and an electric load. However, important requirements, especially, with regard to a stability of the frequency of the alternating voltage of the electric power network will not be sufficiently considered.

Considering the issues above, the electric power network operators commence defining requirements for the connection of large-scale electrolyzing plants in existing power networks. Initial specifications and requirements such as the rate-of-change-of-frequency (RoCoF), withstand capability, or the provision of the instantaneous reserve (the so-called "Momentanreserve") are defined.

In this regard, it is an object of the invention to provide a method and an electrolyzing plant, which may further support stable and reliable operation of the electric power network, especially, with regard to the basic frequency of the alternating voltage of the electric power network. It is especially an object to improve stable operation of the electric power network with regard to LFSM-U, and LFSM-O functionalities.

As a solution, a method, and an electrolyzing plant according to the independent claims are proposed.

Further exemplary embodiments can be derived from the features of the dependent claims.

With regard to a generic method, it is especially proposed that a synchronous machine of the electrolyzing plant has a stator winding, wherein the stator winding is connected with the electric power network, wherein a rotational speed of a rotor of the synchronous machine is detected by a speed sensor that provides a sensor signal depending on the detected rotational speed, wherein an energy adaptation device, which is connected with the DC side of the at least one electric converter, is controlled such that the DC side is subjected to an additional DC power dependent on the sensor signal.

With regard to a generic electrolyzing plant, it is especially proposed that the electrolyzing plant has a synchronous machine having a stator winding and a rotor, wherein the stator winding is connected with the point of connection, a speed sensor configured to detect a rotational speed of the rotor of the synchronous machine, wherein the speed sensor is configured to provide a sensor signal depending on the detected rotational speed, an energy adaptation device connected with the DC side of the at least one electric converter, and a control apparatus connected with the speed sensor, wherein the control apparatus is configured to receive and process the sensor signal and to control an operation of the energy adaptation device, in order to subject the DC side to an additional DC power dependent on the sensor signal.

Among others, the invention is based on the consideration that events of undesired frequency deviation with regard to a rated value of the frequency and/or the phase may last for a relative short time period in many cases. Such a time period may extend over several seconds, or slightly more, for instance, up to a few minutes. Hence, it is required to act very fast in order to achieve sufficient support of the electric power network. An additional consideration is that the power consumption of the electrolyzing plant may be substantially affected by the electrolyzing process established in the electrolyzing cells. Consequently, the electric power consumed at the DC side of the at least one converter may mainly ascertain the over-all power consumption of the whole electrolyzing plant. Further considering that the at least one electric converter may be usually designed to enable a continuous high-power supply of the electrolyzing cells, a short high-power impulse may be possible in order to support the electric power network in the beforementioned event. At the same time, disadvantageous effects on the electrolyzing process and the electrolyzing cells can be kept small or avoided. Therefore, the inventive concept provides additional equipment that allows acting on the DC side of the at least one electric converter. In this regard, the invention proposes to use a combination of the synchronous machine and the speed sensor such as to form a frequency and/or phase detector. The speed sensor responds with a sensor signal indicative for the current frequency and/or phase of the alternating voltage, which acts on the stator winding of the synchronous machine. As the stator winding is connected with the point of connection, this design allows detecting the frequency and/or phase of the alternating voltage of the electric power network. This sensor signal may act directly on the energy adaptation device so that a direct and unambiguous reaction can be provided in order to support the electric power network in stabilizing the frequency and/or the phase of its alternating voltage. A very fast reaction can be achieved, for example, faster than one second.

The present invention seeks to add the functionality of a synchronous machine into the electrolyzing plant and thereby may enable the electrolysis system to provide additional grid supporting functions such as synchronizing power. This concept introduces a synchronous machine connected to the power supply of the electrolysis, which may be a transformer connected to the at least one converter in order to provide the proper DC electrolyzing power to the electrolyzing cells.

The synchronous machine being grid connected may allow reacting to any abnormal grid situation, especially, by means of the corresponding mechanical speed. In a power supply system, an angular speed or rotational speed, respectively, of the synchronous machine may be directly correlated with the grid frequency, and hence any frequency imbalances are directly translated to the angular speed. This means that the mechanical speed of the rotor of the synchronous machine can be directly used as a triggering signal and/or triggering control function, to counteract any voltage frequency and/or phase changes in the electric power network, and thereby enable the provision of the corresponding grid supporting function. While any changes could also be detected by applying the usual approach of network voltage measurement, the difference between this approach and measuring of the voltage is that the speed measurement is almost instantaneous compared with the minimum delay of 10 ms a normal frequency measurement would have. Consequently, a reaction can also be almost instantaneous, therefore, an instantaneous reserve. This could be critical to the stability of the electric power network, which is why the various TSOs prefer to define that initiating a response by initially measuring the voltage and then accordingly counteracting already involves an unacceptable time delay and should not be considered as a synchronizing power feature or an instantaneous reserve feature of the respective component.

Another advantage of the inventive concept is that the control can be affected directly with high speed and not in frequency proving once again that the machine-based emulation would fit more to electrolysis.

Hence, the invention teaches a synchronous machine of the electrolyzing plant having a stator winding, wherein the stator winding is connected with the electric power network.

Consequently, the stator winding may be connected with the point of connection so that the stator winding may be connected with the at least one electric converter in parallel. The stator winding and the at least one electric converter may be subjected to the same alternating voltage provided by the electric power network. The invention considers that the speed of the rotor of the synchronous machine corresponds unambiguously and directly with the current frequency and/or phase of the alternating voltage of the electric power network. Consequently, the rotational speed of the rotor of the synchronous machine is detected by a speed sensor that provides a sensor signal depending on the detected rotational speed. The sensor signal can be an analogous or a digital sensor signal. A control apparatus that controls at least an operation of the energy adaptation device, receives and processes the sensor signal. The control apparatus may comprise at least one hardware circuitry and/or at least one data processing device such as, for example, one or more computers.

The control apparatus controls at least the operation of the energy adaptation device. In this regard, the control apparatus, in turn, also controls the DC electrolyzing power provided by the at least one electric converter such that a value of the DC electrolyzing power is adjusted at least dependent on the processed sensor signal. So, the electrolyzing plant can be controlled with regard to its whole power consumption, for instance, in order to support stability of the electric power network with regard to the frequency and/or phase of the alternating voltage. The direct control of the consumed power dependent on the detected rotational speed of the rotor allows an unambiguous reaction of the electrolyzing plant in response to frequency variations. This allows ensuring that any abnormal situation in the electric power network is instantaneously translated into a respective mechanical speed of the rotor of the synchronous machine and, therefore, into a corresponding change of the sensor signal, which may be considered at least partially by a reference value of the control apparatus, ensuring an instantaneous response as desired by various TSOs. The control apparatus may be integral with the energy adaptation device.

In particular, the data processing device may include one or more computers, one or more microcontrollers, and/or one or more integrated circuits, for example, one or more application-specific integrated circuits, ASIC, one or more field-programmable gate arrays, FPGA, and/or one or more systems-on-a-chip, SoC. A data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said devices. A data processing device may also comprise one or more hardware and/or software interfaces, for example for receiving and/or providing data, respectively.

The data processing device may also comprise one or more memory devices. A memory device may be implemented as a volatile memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM. According to a further aspect of the invention, a computer program comprising instructions may be provided. When the instructions are executed by a data processing system, the instructions cause the data processing system to carry out a computer-implemented method according to the invention. The instructions may be provided as program code. The program code can, for example, be provided as binary code or assembler and/or as source code of a programming language such as for example C, and/or as a program script such as, for example, Python. A computer-readable storage medium storing the computer program may be provided.

The energy adaptation device may be configured to absorb and/or to deliver electric energy. In this regard, the energy adaptation device may be configured to provide a reasonable high DC power for a predetermined period of time to be introduced on the DC side of the at least one electric converter. The energy adaptation device may comprise, for instance, energy dissipating equipment, energy storing equipment, energy generating equipment and/or the like. The energy adaptation device may also have power conversion equipment in order to provide a respective power coupling.

The synchronous machine may be operated without any mechanical load, especially, the rotor being not connected with any other further mechanical rotatable object than, for instance, the speed sensor. The rotor may be freely rotatable. This supports that the rotational speed of the rotor substantially corresponds to situation of the alternating voltage subjected to the stator winding, especially, the frequency and/or any phase variation. The synchronous machine can by separately excited or permanently excited, for example, by use of permanent magnets or the like. The stator winding is designed to conform to the alternating voltage, especially, with regard to any number of phases of the alternating voltage. In an exemplary embodiment, number of phases of the alternating voltage may be three or more than three. The synchronous machine may be designed to have one or more pole pairs or terminal pairs, respectively.

The at least one electric converter may be a static converter without any rotating mechanical parts. The at least one electric converter may have one or more switching elements which are operated to convert the electric power supplied at the AC side to electric power provided at the DC side. An operation of the at least one switching element may be controlled by the control apparatus. The at least one switching element may be an electronic switching element, which may allow providing at least two switching statuses, wherein each of the switching statuses are engaged with a value of a respective switching signal provided by the control apparatus. The at least one electric converter may have thyristors for providing a rectifying operation and for providing the DC electrolyzing power. Also, the at least one electric converter may have transistors for providing the rectifying operation, wherein the transistors are operated in a specific PWM-mode for providing the DC electrolyzing power.

Generally, there may be provided more than only one electric converter. The electric converters may be controlled by the control apparatus. Moreover, the electric converters may be connected in parallel. The electric converters need not be identical, especially, with regard to their rated values such as a rated power, and the like. In an exemplary embodiment, the electric converters are substantially designed identical. Especially, the AC sides of the electric converters may be connected in parallel. Moreover, the DC sides of the electric converters may be connected in parallel. The at least one electric converter may be controlled by the control apparatus. However, the at least one electric converter may be controlled by a control device of the electrolyzing plant, especially, when the control apparatus is integral with the control device.

In this regard, the invention can be easily implemented or retrofit in an existing electrolyzing plant. The control device and/or the control apparatus needs to be adapted only with regard to considering the sensor signal when determining a control signal for the energy adaptation device.

According to an exemplary embodiment, it is proposed that connecting the stator winding with the electric power network is established by connecting in parallel the stator winding and the AC side of the at least one electric converter. Moreover, it is proposed in that the at least one electric converter and the stator winding of the synchronous machine are electrically connected in parallel. As the AC side of the at least one electric converter is connected with the point of connection, the network parameter, especially, the frequency, is available at the synchronous machine. Consequently, a simple link with the synchronous machine can be achieved so that the operation of the synchronous machine corresponds the current network parameter, especially, a rotation of its rotor depends straight on the frequency of the alternating voltage.

According to another exemplary embodiment, it is proposed that the synchronous machine has a number of pole pairs of at least two. The invention may also be applied by using a synchronous machine having more than only one pole pair or terminal pair, respectively. The speed sensor may be adapted correspondingly. The rotor may be designed correspondingly.

According to yet another exemplary embodiment, it is proposed that the electrolyzing plant comprises a transformer having a primary winding and a secondary winding, wherein the primary winding is connected with the electric power network, wherein the secondary winding is connected with the at least one electric converter and the stator winding of the synchronous machine. This allows transforming the alternating voltage of the electric power network at the point of connection to a value that may be well suited to be used by the AC side of the at least one electric converter. This may be also advantageous when the stator winding of the synchronous machine be connected with the secondary winding of the transformer. Especially, the frequency information may be maintained independent from transformation the alternating voltage by the transformer. However, in alternating embodiments, the stator winding of the synchronous machine may be connected with the primary winding of the transformer, wherein the AC side of the at least one converter may be connected with the secondary winding of the transformer. This may not substantially affect the inventive concept.

According to another exemplary embodiment, it is proposed that the control apparatus is formed integral with the at least one electric converter. Frequency information may be immediately available in the control apparatus. Without substantial processing of the sensor signal, the control apparatus may directly act on the energy adaptation device. A fast reaction without substantial delay may be possible.

According to yet another exemplary embodiment, it is proposed that the electrolyzing plant comprises an operating device configured to supply the electrolyzing cells with an agent to be electrolyzed and to discharge at least one product produced in response to electrolyzing the agent, wherein the operating device is configured to control supplying and discharging at least partially dependent on the sensor signal. In this regard, supply of the electrolyzing cells with the agent and discharge of the product can be adapted if the converted power varies. However, the operating device may react with a predetermined time delay upon variation the converted power. The operating device may be at least in communication with the control apparatus.

According to a further exemplary embodiment, it is proposed that the energy adaptation device comprises an electrical resistor and an electronic switching element, wherein the electrical resistor and the electronic switching element are connected in series, wherein the electronic switching element is especially driven in a PWM-mode dependent on the sensor signal. The electrical resistor can be designed as a high-power resistor. The electrical resistor may also comprise an energy dissipation apparatus, in order to transfer the received electrical power to an energy consuming medium such as, for instance, water, air, ground, a heating device for a building, an industrial plant consuming heat, and/or the like. The electronic switching element may comprise one or transistors, thyristors, circuitries of such electronic switching elements, and/or the like. Especially, this embodiment is suited to provide support in the event of over-frequency. Generally, the electronic switching element may be driven in a switching mode, wherein electronic switching element is configured to have two switching statuses only, namely, a switched-on status and a switched-off status. Depending on the power that shall affect the DC side, the switching statuses are provided. Especially, the switching statuses can be provided in the PWM (pulse wide modulation) mode. The concept of PWM is well known to those skilled in the art, which is why it is refrained from providing further details hereto. In one embodiment, the speed information may be obtained by an FPGA/DSP based controller as the control apparatus, and converted into a PWM pulse which would, in turn, enable a DC breaking chopper as the energy adaptation device in parallel to the electrolyzing process in order to burn power in relation to the deviation and, hence, enable the inventive synchronizing power concept. The power level and duration may be based on the resistor sizing and resistor availability giving the fact that this resistor might be used for different purposes and different grid support functions. This embodiment with the chopper may be limited to the absorption of instantaneous power from the grid, since the resistor usually may act as a consumer only.

According to yet another exemplary embodiment, it is proposed that the energy adaptation device comprises a storing equipment configured to store electric energy and an adaptation converter, wherein the adaptation converter has a first side connected with the DC side of the at least one electric converter and a second side connected with the storing equipment, wherein power conversion of the adaptation converter is controlled dependent on the sensor signal. Depending on the power that shall affect the DC side, a respective operation of the adaption converter is provided. The storing equipment can be an electrical energy storing device such as, for instance, a battery, an electric capacitor, in inductor and/or the like. Especially, the storing equipment uses a DC voltage. The DC voltage may conform to the DC electrolyzing voltage. However, the DC voltage of the storing equipment may differ from the DC electrolyzing voltage. Especially, the DC voltage of the storing equipment may vary dependent on the electric energy stored or the like. The storing equipment may also comprise an electric mechanical storage, for example, a rotating inertia or the like. Also, an electric chemical storage may be provided, which is suited to store recoverably electric energy. The adaptation converter is configured to connect electrically the DC side and the storing equipment. The adaptation converter is further configured to control a value of the converted power and a direction of an energy flow. In this regard, the adaptation converter may be provided as a DC/DC converter, which especially may be not only used in an event of over-frequency but also in an event of under-frequency. The operation of the adaptation converter is especially control by the control apparatus. Especially, it is possible that the energy adaptation device uses at least partially an energy storage of the electrolyzing plant, which shall provide a polarization voltage required for start-up or shut-down of the electrolyzing process. This embodiment may enhance the inventive concept by the use of a DC/DC converter as the adaptation converter having, for instance, a battery system. In this way a bi-directional power flow and, hence, bi-directional reserve may be possible.

According to another exemplary embodiment, it is proposed that the energy adaptation device is operated in a block mode, wherein the energy adaptation device is persistently operated during a time extension of the block. The block defines a time window of operation of the energy adaptation device. Generally, the block may extent over some seconds only. It has been found that the necessity of supporting the electric power network in many cases is only required for a short period. However, in this period, it is preferred that the support allows providing a high power.

Additionally, it is proposed that the time extension of the block depends at least partially on the sensor signal. For example, it may be possible that the time extension exceeds or decreases dependent on a time gradient of the sensor signal.

Moreover, it is proposed that a time distance between two consecutive blocks may consider the situation of the energy adaptation device, especially, when the energy adaptation device may not provide electric energy any more, for instance, when the battery is too empty for supplying additional power to the DC side or too much charged for receiving additional power, the energy adaptation device is at a high temperature requiring reducing operation, or the like. The time distance may be selected such that the ordinary function of the energy adaptation device can be maintained or restored.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Advantages and effects of the inventive method also apply to the inventive electrolyzing plant and vice versa. Therefore, method features may also be expressed as apparatus features and vice versa.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic block diagram showing an electrolyzing plant, wherein a synchronous machine is provided to control power transfer of an energy adaptation device, which allows providing an additional power consumption on a DC side of an electric converter for supplying a stack of electrolyzing cells with Dc electrolyzing power; and
FIG 2 a schematic diagram showing an electrolyzing plant such as FIG 1, wherein the energy adaptation device has an energy storing equipment.

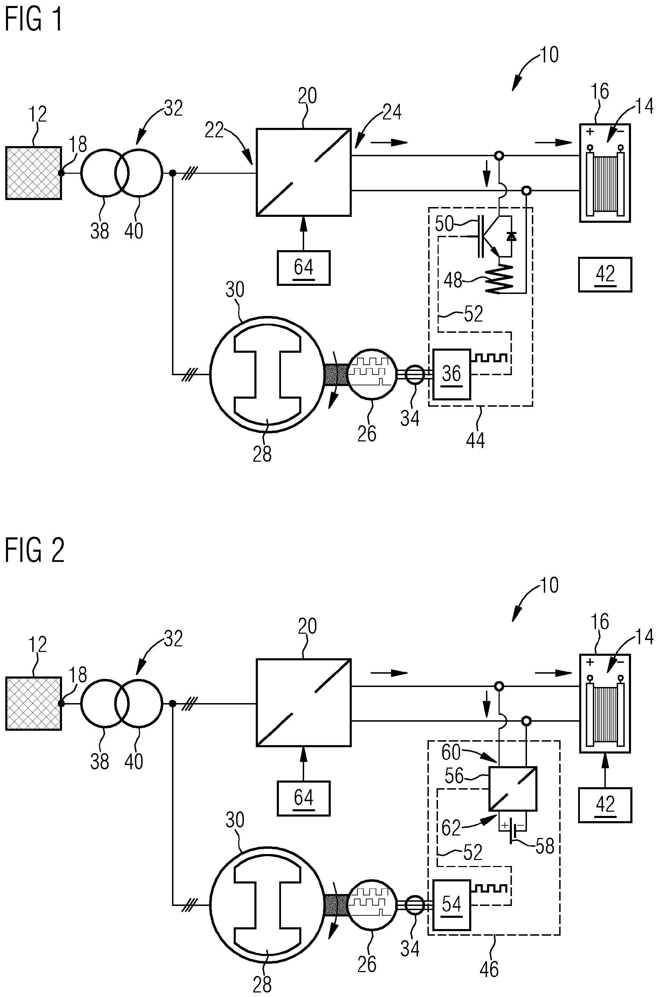

FIG. 1 shows a schematic block diagram showing an electrolyzing plant 10. The electrolyzing plant 10 has plural electrolyzing cells 14, which are arranged in a stack 16. The electrolyzing cells 14 are configured to electrolyze water by providing an electrolyzing process. The electrolyzing process is performed by the electrolyzing cells 14 in response to being subjected to a DC electrolyzing power.

The electrolyzing plant 10 also has a point of connection 18, which is configured to be connected with an electric power network 12 in order to supply the electrolyzing plant 10 with electric power from the electric power network 12. The electric power network 12 deploys an alternating voltage having a basic frequency. In the present embodiment, the alternating voltage is a three-phase voltage. In the present embodiment, the basic frequency has a rated value of 50 Hz. In alternative embodiments, the basic frequency may have a rated value of 60 Hz, 400 Hz, or the like.

The electrolyzing plant 10 further comprises an electric converter 20 having an AC side 22 electrically connected with the point of connection 18, in order to receive the electric power from the electric power network 12. Moreover, the converter 20 has a DC side 24 connected with the electrolyzing cells 14, wherein the DC side 24 is configured to provide the electrolyzing cells 14 with the DC electrolyzing power in response to the AC side 22 receiving the electric power. At the DC side 24, the electric converter 20 provides a DC electrolyzing voltage and a DC electrolyzing current. The DC electrolyzing voltage is selected such that the stack 16 of the electrolyzing cells 14 can be subjected to the DC electrolyzing voltage so that each of its electrolyzing cells 14 is subjected to a respective portion of the DC electrolyzing voltage, in order to provide proper electrolyzing. In the stack 16, the electrolyzing cells 14 are electrically arranged in series. Therefore, in this embodiment, each of the electrolyzing cells 14 is subjected to the same DC electrolyzing current.

Operation of the electric converter 20 is controlled by a converter control apparatus 64 of the electrolyzing plant 10. The converter control apparatus 64 allows adjusting the power converted by the electric converter 20. The converter control apparatus 64 may be integral with a control device controlling an overall operation of the whole electrolyzing plant 10. The control device is not shown in the FIGs.

Moreover, the electrolyzing plant 10 has an operating device 42, which is configured to supply the electrolyzing cells 14 with an agent to be electrolyzed, which is in the present embodiment formed by water. Moreover, the operating device 42 is configured to discharge the products produced in response to electrolyzing the water, which is in the present embodiment hydrogen and oxygen. The operating device 42 may comprise respective piping in order to allow supplying and discharging. The operating device 42 may further comprise heating and/or cooling apparatuses, additional sensor apparatuses and/or the like in order to provide a proper operation of the stack 16 of the electrolyzing cells 14.

The electrolyzing plant 10 has a transformer 32 establishing the connection between the AC side 22 of the electric converter 20 and the point of connection 18. In this regard, the transformer 32 has a primary winding 38 and a secondary winding 40. The windings 38, 40 are designed as a three-phase winding in order to be subjected to a three-phase alternating voltage of the electric power network 12. The primary winding 38 is connected with the point of connection 18. The secondary winding 40 is connected with the AC side 22 of the electric converter 20. So, the electric converter 20 can be subjected to a transformed voltage, which is adapted to a rated configuration of the electric converter 20. In the present embodiment, the electric converter 20 has thyristors for providing a rectifying operation, in order to convert the electric power. However, in alternative embodiments, the electric converter 20 may have transistors for providing a rectifying operation, in order to convert the electric power.

During a current established electrolyzing process, the electric converter 20 receives electric power from the electric power network 12 via the point of connection 18 and the transformer 32. The electric converter 20 converts the electric power to an electric power using the DC electrolyzing voltage and the DC electrolyzing current. This is provided at the DC side 24 of the electric converter 20. So, the electrolyzing cells 14 of the stack 16 can be supplied with electric energy in order to allow establishing the electrolyzing process.

The electrolyzing plant 10 further comprises a synchronous machine 30 having a stator winding and a rotor 28. The stator winding is also designed as a three-phase winding, which is connected to the secondary winding 40 of the transformer 32 so that the AC side 22 of the electric converter 20 and the stator winding of the synchronous machine 30 are connected in parallel. As well known to those skilled in the art, rotation of the rotor 28 corresponds to the frequency of the alternating voltage subjected to the stator winding. In the present embodiment, the rotor 28 has one pole pair or terminal pair, respectively.

Moreover, the electrolyzing plant 10 comprises a speed sensor 26 configured to detect a rotational speed of the rotor 28 of the synchronous machine 30. The speed sensor 26 is configured to provide a sensor signal 34 depending on the detected rotational speed. In this regard, the sensor signal 34 corresponds to the frequency of the alternating voltage subjected to the stator winding, which, in turn, corresponds to the frequency of the alternating voltage provided by the electric power network 12. The transformer 32 may provide the electric connection between the point of connection 18 and the AC side 22 of the electric converter 20. The transformer 32 may transform the alternating voltage having a medium value (MV) to a an alternating voltage having a low value (LV), in order to supply the alternating voltage having the low value to the AC side 22 of the electric converter 20.

The electrolyzing plant 10 additionally comprises an energy adaptation device 44, which is connected with the DC side 24 of the electric converter 20, is controlled such that the DC side 24 is subjected to an additional DC power dependent on the sensor signal 34. In the present embodiment, the energy adaptation device 44 comprises a control apparatus 36 connected with the speed sensor 26. The control apparatus 36 may be integral with energy adaptation device 44. The control apparatus 36 is configured to receive and process the sensor signal 34. Moreover, the control apparatus 36 is configured to control an operation of the energy adaptation device 44 such that the DC electrolyzing power provided by the energy adaptation device 44 is controlled dependent on the sensor signal 34. This allows controlling the electrolyzing plant 10 with regard to its power consumption.

In this embodiment, the energy adaptation device 44 has an electrical resistor 48 and an electronic switching element 50, which is formed by a suitable transistor such as an insulated-gate-bipolar-transistor (IGBT), a field-effect-transistor (FET), a metal-oxide-semiconductor-field-effect-transistor (MOSFET), or the like. The electrical resistor 48 and the electronic switching element 50 are connected in series.

The electronic switching element 50, namely, the transistor, is operated in a switch mode so that the transistor may show two different switching statuses, namely, a switched-on status and a switched-off status. The electronic switching element 50, namely, the transistor, has a control port, which is connected with the control apparatus 36. The control apparatus 36 provides a respective control signal 52 so that the electronic switching element 50, namely, the transistor, shows the switching status dependent on the control signal 52. In turn, the control apparatus 36 provides the control signal 52 dependent on the processed sensor signal 34. In this regard, the electronic switching element 50, namely, the transistor, is operated in a PWM mode, in order to regulate the power consumed by the energy adaptation device 44.

As can be seen from this embodiment, only energy consumption is possible. Therefore, the embodiment is especially suited for acting on the event of over frequency. In the event of over-frequency, it is possible to turn on the energy adaptation device 44 or to increase the power transfer of the energy adaptation device 44, respectively.

In order to allow a fast reaction upon a frequency deviation of the alternating voltage of the electric power network 12, the control apparatus 36 determines the PWM mode and the respective control signal 52 dependent on the sensor signal 34 of the speed sensor 26. In this regard, a fast reaction of the electrolyzing plant with regard to its power consumption can be achieved without substantial time delay in order to react directly on an undesired frequency variation with regard to over-frequency. So, if the frequency rises with regard to a rated frequency value, the rotational speed of rotor 28 increases, which can be detected by the speed sensor 26, in turn, providing the sensor signal 34. The sensor signal 34 can directly act on a component of the control apparatus 36, which determines the PWM mode. So, the inventive concept allows supporting stability and reliability of the electric power network 12.

Generally, the synchronous machine 30 being grid connected reacts to any abnormal grid situation by means of the corresponding mechanical speed of the rotor 28. In a power system, the angular speed of the rotor 28 of the synchronous machine 30 is directly correlated with the grid frequency, and, hence, any frequency imbalances are directly translated to the angular speed of the rotor 28. This means that the rotor's mechanical speed can be directly used as a triggering signal and triggering control function, in order to counteract any frequency or phase changes of the alternating voltage of the electric power network 12, and thereby enable the provision of the corresponding grid supporting function. Although any changes can also be detected by the applying the usual approach of network voltage measurement, the difference between the inventive concept and measuring the voltage is that using the rotational speed of the rotor 28 of the synchronous machine 30 is almost instantaneous compared with the normal frequency measurement. Consequently, a reaction can also be almost instantaneous according to the invention and, therefore, may form an instantaneous reserve. This can be relevant with regard to the system stability. The various TSOs are going to define that initiating a response by initially measuring the voltage and then, accordingly counteracting already involves unacceptable time delays and cannot be considered as a synchronizing power feature or an instantaneous reserve feature of the respective component.

Another advantage of the inventive concept is that the control is done directly in speed and not in frequency proving once again that the machine-based emulation may fit more to electrolysis.

The speed information is obtained by the control apparatus 36 having an FPGA/DSP based controller, and converted into a PWM pulse, which may, in turn, enable the energy adapting device 44 in parallel to the stack 16, in order to burn power in relation to the deviation and, hence, enable the inventive synchronizing power concept. The power level and duration can be based on the design of the electrical resistor 48 and resistor availability giving the fact that this resistor 48 might be used for different purposes and different grid support functions.

This allows adapting the PWM mode such that additional power can be consumed by the electrolyzing plant 10.

FIG 2 shows a second embodiment of an electrolyzing plant 10 such as generally already described with regard to FIG 1. However, the embodiment according to FIG 2 differs from the embodiment according to FIG 1 by the features that the energy adaptation device 44 is replaced by an energy adaptation device 46.

In the second embodiment, the energy adaptation device 46 comprises a battery 58 as a storing equipment configured to store electric energy and an adaptation converter 56. The adaptation converter 56 has a first side 60 connected with the DC side 24 of the electric converter 20 and a second side 62 connected with the battery 58. Power conversion of the adaptation converter 56 is controlled dependent on the sensor signal 34. Control of the adaptation converter 56 is achieved by a control apparatus 54 of the energy adaptation device 46. The control apparatus 54 provides a control signal 52 for the adaptation converter 56 dependent on the sensor signal 34. As the adaptation converter 56 is formed by a DC/DC-converter, the control signal 52 may also represent a PWM mode. With the control signal 52, a direction of the energy flow can be controlled beside the level of power transfer.

Additionally with regard to the first embodiment, if the frequency decreases, the embodiment allows achieving a respective reaction because the rotational speed of the rotor 28 decreases, which can be also detected by the speed sensor 26. The respective sensor signal 34 causes the control apparatus 54 to shift the PWM mode such that the consumed power can be reduced. So, the inventive concept allows supporting stability and reliability of the electric power network 12.

Any change with regard to the frequency of the alternating voltage of the electric power network 12 or with regard to its phase, respectively, results in an angular speed change of the rotor 28 as there is a direct and instantaneous coupling between these two components. This coupling between any abnormal network change with regard to a frequency and/or phase and the angular or rotating speed of the rotor 28 of the synchronous machine 30 enables provision of the instantaneous reserve for generation units.

Summarized, a primary goal of the invention is the control of the DC electrolyzing current or DC electrolyzing power, respectively, so that a controlled operation of the electrolyzing process can be substantially guaranteed. The inventive concept proposes the control apparatus 36, 54 determining an additional DC electrolyzing current flow into the DC side 24, which may directly relate to the rotating speed of the rotor 28 of the synchronous machine 30 connected in parallel to the AC side 22.

Although the invention is described by the embodiments as detailed above, various amendments can be provided without leaving the scope of the inventive concept. Especially, it should be noted that the inventive concept is not bound to electrolyzing of water. Rather, it can generally be applied to any other electrolyzing processes such as, for instance, electrolyzing of carbon dioxide, or the like.

The embodiments described above serve only for further explanation of the invention and shall not be regarded as limiting the scope.

## Claims

1. A method of controlling an electrolyzing plant (10) having plural electrolyzing cells (14), especially configured to electrolyze water by providing an electrolyzing process, wherein the electrolyzing cells (14) perform the electrolyzing process in response to being subjected to a DC electrolyzing power, wherein the electrolyzing plant (10) is supplied with electric power from an electric power network (12), wherein the electric power network (12) deploys an alternating voltage having a basic frequency, wherein an AC side (22) of at least one electric converter (20) of the electrolyzing plant (10) is electrically connected with the electric power network (12) in order to receive the electric power, and a DC side (24) of at least one electric converter (20) provides the DC electrolyzing power in response to the AC side (22) receiving the electric power,
**characterized in that**
a synchronous machine (30) of the electrolyzing plant (10) has a stator winding, wherein the stator winding is connected with the electric power network (12), wherein a rotational speed of a rotor of the synchronous machine (30) is detected by a speed sensor (26) that provides a sensor signal (34) depending on the detected rotational speed, wherein an energy adaptation device (44, 46), which is connected with the DC side (24) of the at least one electric converter (20), is controlled such that the DC side (24) is subjected to an additional DC power dependent on the sensor signal (34).

2. The method according to claim 1, **characterized in that** the energy adaptation device (44) comprises an electrical resistor (48) and an electronic switching element (50), wherein the electrical resistor (48) and the electronic switching element (50) are connected in series, wherein the electronic switching element (50) is especially driven in a PWM-mode dependent on the sensor signal (34).

3. The method according to any one of the preceding claims, **characterized in that** the energy adaptation device (46) comprises a storing equipment (58) configured to store electric energy and an adaptation converter (56), wherein the adaptation converter (56) has a first side (60) connected with the DC side (24) of the at least one electric converter (20) and a second side (62) connected with the storing equipment (58), wherein power conversion of the adaptation converter (56) is controlled dependent on the sensor signal (34).

4. The method according to any one of the preceding claims, **characterized in that** the energy adaptation device (44, 46) is operated in a block mode, wherein the energy adaptation device (44, 46) is persistently operated during a time extension of the block.

5. The method according to claim 4, **characterized in that** the time extension of the block depends at least partially on the sensor signal (34).

6. The method according to any one of the preceding claims, **characterized in that** a power of the energy adaptation device (44, 46) is adjusted dependent on a time gradient of the sensor signal (34).

7. An electrolyzing plant (10) having
- plural electrolyzing cells (14), especially configured to electrolyze water by providing an electrolyzing process, wherein the electrolyzing cells (14) perform the electrolyzing process in response to being subjected to a DC electrolyzing power,
- a point of connection (18) configured to be connected with an electric power network (12) in order to supply the electrolyzing plant (10) with electric power from the electric power network (12), wherein the electric power network (12) deploys an alternating voltage having a basic frequency,
- at least one electric converter (20) having an AC side (22) electrically connected with the point of connection (18), in order to receive the electric power from the electric power network (12), and a DC side (24) connected with the electrolyzing cells (14), wherein the DC side (24) is configured to provide the electrolyzing cells (14) with the DC electrolyzing power in response to the AC side (22) receiving the electric power,
**characterized by**
- a synchronous machine (30) having a stator winding and a rotor (28), wherein the stator winding is connected with the point of connection (18),
- a speed sensor (26) configured to detect a rotational speed of the rotor (28) of the synchronous machine (30), wherein the speed sensor (26) is configured to provide a sensor signal (34) depending on the detected rotational speed,
- an energy adaptation device (44, 46) connected with the DC side (24) of the at least one electric converter (20), and
- a control apparatus (36, 54) connected with the speed sensor (26), wherein the control apparatus (36, 54) is configured to receive and process the sensor signal (34) and to control an operation of the energy adaptation device (44, 46), in order to subject the DC side (24) to an additional DC power dependent on the sensor signal (34).

8. The electrolyzing plant (10) according to claim 7, **characterized in that** the energy adaptation device (44, 46), on the one hand, and the electrolyzing cells (14), on the other hand, are connected in parallel.

9. The electrolyzing plant (10) according to claim 7 or 8, **characterized in that** the energy adaptation device (44, 46) has a thermal capacity, wherein the thermal capacity is configured to store thermal energy when the energy adaptation device (44, 46) is operated at a rated power.
